Europäisches Patentamt

European Patent Office

Office européen des brevets

(11) Veröffentlichungsnummer : **0 464 391 B1**

# (12) EUROPÄISCHE PATENTSCHRIFT

(45) Veröffentlichungstag der Patentschrift :
**02.02.94 Patentblatt 94/05**

(51) Int. Cl.$^5$ : **G01B 7/02,** G01B 7/14,
G01D 3/02

(21) Anmeldenummer : **91109279.9**

(22) Anmeldetag : **06.06.91**

(54) **Messeinrichtung und Verfahren zu ihrer Betriebseinstellung.**

(30) Priorität : **25.06.90 DE 4020196**

(43) Veröffentlichungstag der Anmeldung :
**08.01.92 Patentblatt 92/02**

(45) Bekanntmachung des Hinweises auf die
Patenterteilung :
**02.02.94 Patentblatt 94/05**

(84) Benannte Vertragsstaaten :
**CH DE FR IT LI**

(56) Entgegenhaltungen :
**EP-A- 0 303 563**
**WO-A-90/01151**
**DE-A- 2 614 778**
**DE-C- 3 518 187**
**FR-A- 2 295 402**

(73) Patentinhaber : **Weidmüller Interface GmbH &
Co.
Paderborner Strasse 175
D-32760 Detmold (DE)**

(72) Erfinder : **Jagiella, Manfred, (Ing.)
Sophienstrasse 130
W-7500 Karlsruhe 1 (DE)**
Erfinder : **Barth, Kilian (Ing.)
Luisenstrasse 11
W-7564 Forbach (DE)**
Erfinder : **Topkaya, Ahmet, Dr. (Ing.)
Hellenstrasse 13 A
W-7500 Karlsruhe 41 (DE)**

(74) Vertreter : **TER MEER - MÜLLER -
STEINMEISTER & PARTNER
Mauerkircherstrasse 45
D-81679 München (DE)**

EP 0 464 391 B1

## Beschreibung

Die Erfindung betrifft ein Betriebseinstellverfahren gemäß dem Oberbegriff des Patentanspruchs 1 für eine Einrichtung zur Messung einer geometrischen Größe sowie eine derartige Einrichtung zur Messung einer geometrischen Größe gemäß dem Oberbegriff des Patentanspruchs 7. Die geometrische Größe kann z. B. ein Abstand zwischen einem Sensorkopf und einem Gegenstand, etwa ein Werkstück, die Dicke eines Gegenstandes, oder dergleichen, sein.

Es gehört bereits eine Einrichtung zur kapazitiven Messung eines Abstands zwischen einem Sensorkopf und einem Werkstück zum Stand der Technik, bei der eine geregelte, phasenabhängige Stromquelle zum Einsatz kommt. Der phasenabhängigen Stromquelle wird eine Wechsel-Speisespannung zugeführt, welcher eine Wechsel-Meßspannung, die am Sensorkopf abgenommen wird, überlagert wird, und zwar über einen Rückkopplungszweig der phasenabhängigen Stromquelle.

Die phasenabhängige Stromquelle, bei der die Amplitude des Wechselstroms bei jeweils fester Phase konstant ist, sich aber mit der Phase ändert, wird schaltungstechnisch durch eine Regelschaltung realisiert, die eine Spannung über ein konstantes Referenzelement konstant hält, um somit die Amplitude des Wechselstroms durch dieses Referenzelement konstantzuhalten.

Wird der Sensorkopf gegen einen anderen ausgetauscht, so ist dies im allgemeinen jedoch mit einer Änderung der Meßkapazität verbunden, da sich in der Regel die geometrischen Abmessungen der Sensorköpfe voneinander unterscheiden. Es ergibt sich somit eine andere Kennlinie zwischen Wechsel-Meßspannung und geometrischer Größe, so daß die genannte Meßeinrichtung, was den Austausch des Sensorkopfs angeht, wenig flexibel ist.

Darüber hinaus wird es häufig gewünscht, daß die Wechsel-Meßspannung bzw. deren Amplitude möglichst linear zu der zu messenden geometrischen Größe ist, also im vorliegenden Fall zum Abstand. Auf diese Weise läßt sich gewährleisten, daß bei Verwendung des Sensorkopfs zur Abstandserfassung in einem geschlossenen Regelkreis eines Sensorsystems die Dynamik des Regelkreises unabhängig vom Abstand ist. Andernfalls könnte bei zu großen Abständen die Abstandsregelung zu langsam erfolgen und bei zu kleinen Nennabständen das Sensorsystem zu schwingen beginnen.

Bei der eingangs genannten Meßeinrichtung wird zur Gewährleistung der Linearität zwischen der Wechsel-Meßspannung und dem Abstand ein kapazitiver Sensorkopf verwendet, mit dem sich die Verhältnisse bei einem idealen Plattenkondensator nachbilden lassen.

Wird allerdings ein Sensorkopf mit einer Elektrodenform verwendet, die nicht mehr die Linearität zwischen der Wechsel-Meßspannung und dem Abstand sicherstellt, so treten Probleme bei der Abstandregelung mit Hilfe des die Meßeinrichtung enthaltenden Sensorsystems auf, wie oben beschrieben.

Aus der EP-A-0 303 563 ist bereits eine Sensoreinrichtung mit Kompensationsanordnung bekannt. Die Sensoreinrichtung besitzt einen Sensorkopf mit einem Oszillator, dessen Frequenz in Abhängigkeit von der Veränderung einer Sensorkapazität oder -induktivität variiert. Die Oszillatorschwingungen werden über ein Koaxialkabel einer Auswerte- und Bedieneinheit zugeführt, welche die Frequenzänderungen auswertet. Der Sensorkopf enthält ferner Temperaturmeßmittel, welche einen temperaturabhängigen Speisestrom verbrauchen. Der Speisestrom, der über das Koaxialkabel zugeführt wird, wird in der Auswerte- und Bedieneinheit gemessen und in einer Meßschaltung in ein Signal umgewandelt, das die Temperatur des Sensorkopfes angibt. Dieses Signal wird verwendet, um über eine Mikroprozessor-Steuerschaltung eine steuerbare Spannungsquelle einzustellen, die die Speisespannung über das Koaxialkabel zum Sensorkopf liefert. In diesem beeinflußt die Höhe der Speisespannung eine steuerbare Reaktanz, die im Schwingkreis des Oszillators angeordnet ist. So kann durch die von der Temperatur des Sensorkopfes abhängigen Änderungen der Speisespannung die Temperaturabhängigkeit der Oszillatorfrequenz ausgeglichen werden.

Ferner ist aus der WO-A-9 001 151 eine Linearisierungsschaltung bekannt, bei der ein zu einem Zustands-Sensorelement gelieferter Anregungsstrom bei Änderung des detektierten Zustands geändert wird. Dies führt zu einer Linearisierung einer elektrischen Charakteristik des Zustands-Sensorelements. Bei dieser Linearisierungsschaltung wird der Anregungsstrom über einen gemeinsamen Knoten zum Zustands-Sensorelement geführt, wobei am gemeinsamen Knoten die Spannung detektiert wird. Die detektierte Spannung wird in einen Strom umgewandelt, wobei wenigstens ein Teil des in Folge der Umwandlung erhaltenen Stromes zum gemeinsamen Knoten zurückgeführt wird.

Der Erfindung liegt die Aufgabe zugrunde, ein Verfahren anzugeben, mit dem sich der Betrieb der Meßeinrichtung auf unterschiedliche Sensoren einstellen bzw. abstimmen läßt. Darüber hinaus soll die Meßeinrichtung der eingangs genannten Art so weitergebildet werden, daß eine derartige Einstellung möglich ist.

Die Erfindung bezieht sich auf ein Betriebseinstellverfahren für eine Meßeinrichtung, die zur Messung einer geometrischen Größe unter Verwendung eines Sensors dient, dem ein Wechsel-Meßstrom mit konstanter Amplitude von einer geregelten, phasenabhängigen Stromquelle zugeführt wird, wobei in einer zur Stromquelle gehörenden Überlagerungsstufe, der ein Referenzglied zur Erzeugung des Wechsel-Meßstroms nachgeschaltet ist, eine Wechsel-Speisespannung und eine vom Sensor über einen Rückkopplungszweig der Stromquelle abgenommene Wechsel-Meßspannung zu einer am Referenzglied anliegenden Gesamtspannung überlagert werden. Das erfindungsgemäße Betriebseinstellverfahren zeichnet sich dadurch aus, daß zur Anpassung einer die Beziehung zwischen der Wechsel-Meßspannung und der geometrischen Größe darstellenden Kennlinie an einen vorgegebenen Kennlinienverlauf wenigstens eine der der Überlagerungsstufe zugeführten Wechselspannungen verändert wird. Die Änderung kann sowohl die Amplitude als auch die Phase betreffen.

Erfolgt beispielsweise der Austausch eines ersten Sensorkopfs durch einen zweiten Sensorkopf mit unterschiedlicher Geometrie, so kann durch Veränderung der Amplitude der Wechsel-Speisespannung der durch das Referenzglied hindurchfließende Wechsel-Meßstrom so verändert werden, daß beim zweiten Sensorkopf wenigstens annähernd die gleiche Kennlinie zwischen Wechsel-Meßspannung und geometrischer Größe wie beim ersten Sensorkopf erhalten wird. Die Meßeinrichtung läßt sich daher für eine Vielzahl verschiedener Sensorköpfe verwenden, so daß ihr Anwendungsbereich bzw. Einsatzbereich relativ groß ist.

Zur Kennlinienanpassung nach dem Austausch eines Sensorkopfs kann beispeislweise die Amplitude der Wechsel-Speisespannung bei einem ersten Einstellvorgang so eingestellt werden, daß bei einer Einstellung der geometrischen Größe auf den Wert Null die Wechsel-Meßspannung ebenfalls den Wert Null aufweist, während anschließend bei einem zweiten Einstellvorgang die Wechsel-Speisespannung so verändert wird, daß dann, wenn die geometrische Größe auf einen vorbestimmten Wert größer als Null eingestellt ist, die Wechsel-Meßspannung ebenfalls einen vorbestimmten Einstellwert größer als Null einnimmt. Mit anderen Worten werden für den neuen Sensorkopf zwei Punkte seiner Kennlinie zwischen Wechsel-Meßspannung und geometrischer Größe mit zwei entsprechenden Punkten der Kennlinie des ersten Sensorkopfs zur Deckung gebracht. Dies kann lediglich durch Änderung der Amplitude der Wechsel-Speisespannung erfolgen, so daß eine Anpassung der Meßeinrichtung an neue Sensorköpfe relativ einfach durchgeführt werden kann.

Nach einer sehr vorteilhaften Weiterbildung der Erfindung wird zwischen der Wechsel-Speisespannung und der Wechsel-Meßspannung eine Phasenverschiebung eingestellt und danach eine Kennlinie zwischen der Wechsel-Meßspannung und der geometrischen Größe aufgenommen, wobei diese Vorgänge so lange unter Änderung der Phasenverschiebung wiederholt werden, bis die aufgenommene Kennlinie linear ist.

Je nach Art oder Form des Sensors läßt sich somit die Phase zwischen der Wechsel-Speisespannung und der Wechsel-Meßspannung so verändern, daß bei Verwendung verschiedener Sensoren wieder eine Linearität zwischen der Wechsel-Meßspannung und der geometrischen Größe erhalten wird, so daß bei jedem Sensor die Dynamik des Regelkreises des Sensorsystems, in welchem die Meßeinrichtung verwendet wird, unabhängig von der zu messenden geometrischen Größe ist.

Eine Einrichtung nach der Erfindung zur Messung einer geometrischen Größe unter Verwendung eines Sensors enthält eine phasenabhängige Stromquelle zur Zuführung eines Wechsel-Meßstroms mit konstanter Amplitude zum Sensor, die eine Überlagerungsstufe mit nachgeschaltetem Referenzglied zur Erzeugung des Wechsel-Meßstroms aufweist, welche zur Überlagerung einer Wechsel-Speisespannung mit einer vom Sensor über einen Rückkopplungszweig der Stromquelle abgenommenen Wechsel-Meßspannung zu einer am Referenzglied anliegenden Gesamtspannung dient. Diese Einrichtung zeichnet sich dadurch aus, daß eine Einstelleinrichtung zur Einstellung der Amplitude der an die Überlagerungsstufe angelegten Wechsel-Speisespannung vorhanden und/oder ein Phaseneinstellglied zur Einstellung einer Phasenverschiebung zwischen der Wechsel-Speisespannung und der Wechsel-Meßspannung im Rückkopplungszweig der phasenabhängigen Stromquelle angeordnet sind.

Vorzugsweise liegt das Phaseneinstellglied zwischen einem im Rückkopplungszweig vorhandenen Impedanzwandler und der Überlagerungsstufe zur Überlagerung von Wechsel-Speisespannung und Wechsel-Meßspannung.

Die erfindungsgemäße Meßeinrichtung ermöglicht somit einerseits bei einem Austausch der Sensorköpfe die Anpassung der jeweiligen Kennlinien zwischen Wechsel-Meßspannung und geometrischer Größe an eine vorgegebene Kennlinie und andererseits die Linearisierung der Kennlinien für die jeweiligen Sensorköpfe. Anpassung und Linearisierung können dabei wahlweise oder gemeinsam erfolgen.

Grundsätzlich ist es möglich, die Wechsel-Meßspannung auf kapazitivem, induktivem oder resistivem Wege zu erzeugen.

Nach einer vorteilhaften Ausgestaltung der Erfindung ist der Sensor jedoch als kapazitiver Sensor ausgebildet, wodurch unter anderem besonders empfindliche Abstands- und Dickenmessungen möglich sind.

Das Referenzglied kann bei kapazitiven Sensoren ein Widerstand sein, so daß sich an dem so erhaltenen RC-Glied eine Phasenverschiebung ergibt, die vom Wert der geometrischen Größe, z. B. vom Abstand, abhängt. Diese Phasenverschiebung beeinflußt die Wirkung der phasenabhängigen Stromquelle, so daß zusammen mit der durch das Phaseneinstellglied bewirkten Phasenverschiebung eine Kennlinien-Linearisierung erfolgt. Dabei ist der Widerstandswert des Referenzwiderstands wenigstens annähernd so groß wie der zwischen

3

Sensorkopf und Werkstück gebildete kapazitive Blindwiderstand. Die Kapazität zwischen Sensorkopf und Werkstück ist in der Regel kleiner als 1 pF, so daß bei Verwendung einer Kapazität als Referenzglied diese ebenfalls kleiner als 1 pF sein müßte. Eine solche Referenzkapazität läßt sich nur sehr schwer herstellen. Dagegen kann ein als Referenzglied verwendeter Widerstand im MΩ-Bereich liegen, wobei dieser Referenzwiderstand als Serienbauteil erhältlich ist, was zu einer Verbilligung der Schaltung führt.

Die Phasenverschiebung zwischen der Wechsel-Speisespannung und der Wechsel-Meßspannung kann für jeden Sensor getrennt durchgeführt werden, und zwar empirisch durch Aufnahme der Kennlinie zwischen Wechsel-Meßspannung und geometrischer Größe. Phasenverschiebung und Kennlinienaufnahme wechseln sich so lange ab, bis eine lineare Kennlinie zwischen Wechsel-Meßspannung und geometrischer Größe vorliegt. Erst dann erfolgt mit Hilfe der Wechsel-Meßspannung die Regelung der geometrischen Größe durch das Sensorsystem, beispielsweise eine Abstandsregelung, um etwa eine Schneiddüse oder dergleichen in einem konstanten Abstand über einem Werkstück zu führen.

Die Erfindung wird nachfolgend unter Bezugnahme auf die Zeichnung näher beschrieben. Es zeigen:

Fig. 1     ein Prinzipschaltbild einer Meßschaltung mit Stromquelle zur Abstandsmessung,

Fig. 2     ein Blockschaltbild einer erfindungsgemäßen Einrichtung nach einem ersten Ausführungsbeispiel und

Fig. 3     ein Blockschaltbild einer erfindungsgemäßen Einrichtung nach einem zweiten Ausführungsbeispiel.

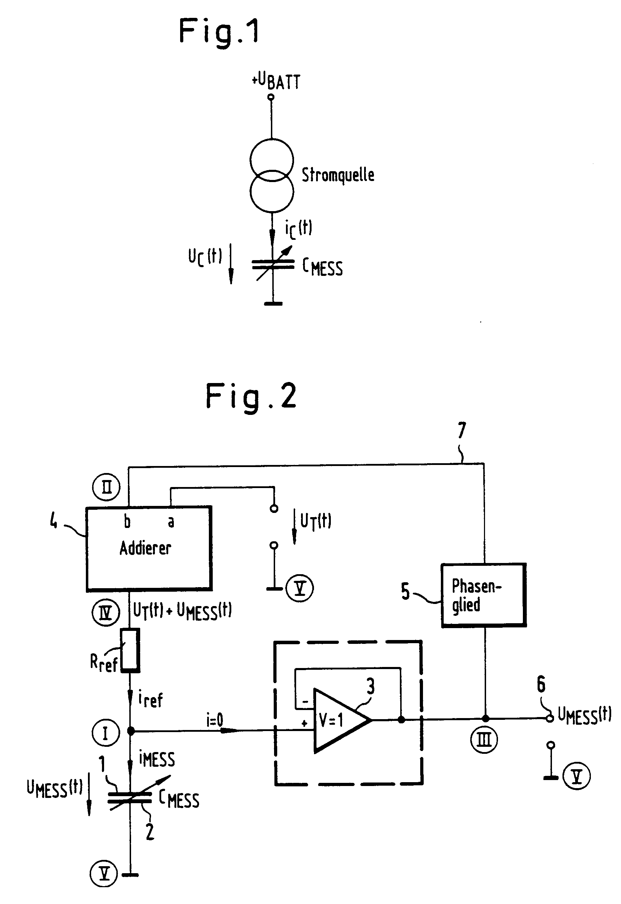

Anhand der Fig. 1 wird eine kapazitive Abstandsmessung mit linearem Ausgangssignal erläutert. Sie erfolgt unter Verwendung einer Stromquelle, die ausgangsseitig mit einem Meßkondensator $C_{MESS}$ verbunden ist. Der Meßkondensator $C_{MESS}$ wird beispielsweise durch einen Sensorkopf gebildet, der im Abstand über einem Werkstück geführt ist. Sensorkopf und Werkstück bilden jeweils eine Kondensatorplatte des Meßkondensators $C_{MESS}$.

Die Stromquelle empfängt eine Versorgungsspannung $U_{BATT}$ und liefert ausgangsseitig einen Wechselstrom $i_C(t)$ mit konstanter Amplitude I. Wird mit $X_C$ der Blindwiderstand $\frac{1}{\omega \cdot C}$ des Meßkondensators $C_{MESS}$ bezeichnet, so ergibt sich für die Spannung am Meßkondensator $C_{MESS}$ der folgende Ausdruck:

$$U_C(t) = X_C \cdot i_C(t) \qquad (1)$$

Mit $X_C = \frac{1}{\omega \cdot C}$, $\omega = 2\pi f$ und $C = \frac{\varepsilon \cdot A}{d}$ (gilt für idealen Plattenkondensator) sowie mit $i_C(t) = I \cdot \sin(\omega t)$ folgt:

$$U_C(t) = d \frac{I \cdot \sin 2\pi ft}{\varepsilon \cdot A \cdot 2\pi f} \qquad (2)$$

Hierin sind d der Abstand zwischen den Kondensatorplatten des Meßkondensators $C_{MESS}$, $\varepsilon$ die Dielektrizitätskonstante, f die Frequenz, A die Fläche der Kondensatorplatten und I die konstante Amplitude des Wechselstroms $i_C(t)$.

Betrachtet man den Ausdruck $\frac{I}{\varepsilon \cdot A \cdot 2\pi f}$ als Konstante, sofern die Frenquenz f konstant ist, so ergibt sich:

$$U_C(t) \sim d \cdot \sin 2\pi ft \qquad (3)$$

Man erhält also am Meßkondensator $C_{MESS}$ eine sinusförmige Meßspannung $U_C(t)$, deren Amplitude direkt proportional zum Abstand d ist.

Die Stromquelle kann im vorliegenden Fall eine phasenabhängige Stromquelle sein, die schaltungstechnisch durch eine Regelschaltung realisiert wird, die eine Spannung über ein konstantes Referenzelement konstant hält, das z. B. ein Widerstand sein kann. Damit ist der Strom durch dieses Referenzelement konstant.

Die Fig. 2 zeigt ein erstes Ausführungsbeispiel einer erfindungsgemäßen Meßschaltung, die eine derartige phasenabhängige Stromquelle enthält. Die Schaltung wird wieder im Zusammenhang mit einer kapazitiven Abstandsmessung erläutert.

Diese Schaltung weist ebenfalls den Meßkondensator $C_{MESS}$ auf, der, wie bereits zuvor erwähnt, durch den Sensorkopf und das Werkstück gebildet wird. Der Sensorkopf sei hier mit dem Bezugszeichen 1 versehen, während das Werkstück das Bezugszeichen 2 trägt. Über dem Meßkondensator $C_{MESS}$ fällt die Meßspannung $U_{MESS}(t)$ ab (entspricht der Spannung $U_C(t)$ in Fig. 1). Der Meßkondensator $C_{MESS}$ ist über den Sensorkopf 1 mit einem Anschluß eines Referenzwiderstands $R_{ref}$ und ferner mit einem positiven Eingang eines Impedanzwandlers 3 verbunden. Der andere Anschluß des Referenzwiderstands $R_{ref}$ ist mit dem Ausgang eines Addierers 4 verbunden, der an seinem ersten Eingang a eine Wechsel-Speisespannung $U_T(t) = U \cdot \sin(\omega t)$ empfängt. Der andere Eingang b des Addierers 4 ist mit dem Ausgang eines Phasenglieds 5 verbunden, dessen Eingang einerseits mit dem Ausgang des Impedanzwandlers 3 und andererseits mit einer Ausgangsklemme 6 der Abstandsmeßschaltung verbunden ist. Der Ausgang des Impedanzwandlers 3 ist ferner auf seinen negativen Eingang zurückgekoppelt. Das die zweite Kondensatorplatte des Meßkondensators $C_{MESS}$ bildende Werkstück 2 ist geerdet. Der den Impedanzwandler 3 und das Phasenglied 5 enthaltende Leitungszweig 7 kann als Rückkopplungszweig bezeichnet werden. Der Addierer 4 ist z. B. ein Operationsverstärker oder ein Übertrager.

Im nachfolgenden wird die Wirkungsweise der in Fig. 2 gezeigten Schaltung näher erläutert.

Wie zu erkennen ist, fällt zwischen den Punkten I und V die Meßspannung $U_{MESS}(t)$ ab. Da der Impedanzwandler 3 die Verstärkung V = 1 aufweist und nur zur Spannungsentkopplung dient, erscheint auch am Ausgang des Impedanzwandlers 3 die Spannung $U_{MESS}$ (t) und somit auch zwischen den Punkten III und V. Die Meßspannung $U_{MESS}(t)$ liegt ferner am zweiten Eingang b des Addierers 4 an, also am Punkt II. Am Ausgang des Addierers 4 steht somit die Summe der beiden Eingangsspannungen $U_{MESS}(t)$ und $U_T(t)$, die am Punkt IV anliegt.

Da am Punkt IV $U_T(t) + U_{MESS}(t)$ und am Punkt I $U_{MESS}(t)$ anliegen, muß am Widerstand $R_{ref}$ die Spannung $U_T(t)$ abfallen, und zwar unabhängig von der Höhe der Meßspannung $U_{MESS}(t)$. Somit ist der Strom durch den Widerstand $R_{ref}$ nur von der Spannung $U_T(t)$ abhängig.

Da am Addiereingang a des Addierers 4 die konstante Wechselspannung $U_T(t) = U \cdot \sin(\omega t)$ anliegt, erhält man einen ausgangsseitigen Wechselstrom von

$$i_{ref}(t) = I \cdot \sin(\omega t) \quad (4)$$

mit $I = \dfrac{U}{R_{ref}}$. Der Eingangsstrom i des Impedanzwandlers 3 ist viel kleiner als $i_{ref}(t)$, so daß die Beziehung gilt:

$$i_{ref}(t) = i_{MESS}(t) \quad (5)$$

Durch den Meßkondensator $C_{MESS}$ fließt ein Wechselstrom $i_{MESS}(t)$ mit konstanter Amplitude. Die am Meßkondensator $C_{MESS}$ abfallende Spannung $U_{MESS}(t)$ ist somit linear proportional zum Meßabstand d. Der Meßabstand d ist der Abstand zwischen den Kondensatorplatten 1 und 2 des Meßkondensators $C_{MESS}$ und bildet im vorliegenden Fall die erwähnte geometrische Größe.

Die in Fig. 2 dargestellte Schaltung ist eine Regelschaltung, deren Aufgabe es ist, die Spannung über dem Referenzwiderstand $R_{ref}$ und damit den Strom $i_{ref}$ konstantzuhalten, der durch den Referenzwiderstand $R_{ref}$ hindurchfließt. Der Strom $i_{ref}$ ist also ein Wechselstrom mit konstanter Amplitude.

Wie in jedem dynamischen Regelkreis spielt die Phase der rückgekoppelten Größe eine entscheidende Rolle. Ist die Phasenbedingung nicht erfüllt, wird die Gegenkopplung zur Mitkopplung, so daß die Regelung nicht mehr funktioniert. Dies muß bei der Dimensionierung der Schaltung beachtet werden, da im Falle des Referenzwiderstands $R_{ref}$ der Meßkondensator $C_{MESS}$ mit dem Referenzwiderstand $R_{ref}$ ein zusätzliches R-C-Glied bildet, dessen Phase sich mit dem Abstand des Sensors ändert. Eine zu große Phasenänderung läßt sich mit Hilfe des Phaseneinstellglieds 5 durch geeignete Einstellung kompensieren, so daß bei allen Meßabständen eine stabile Regelung erhalten wird.

Die wichtigste Aufgabe des Phaseneinstellglieds 5 liegt jedoch in der zusätzlichen Linearisierbarkeit der Abstandskennlinie, also der Kennlinie, die die Beziehung zwischen der Wechsel-Meßgröße (Meßspannung $U_{MESS}(t)$) und der geometrischen Größe, bzw. hier dem Abstand d, darstellt.

Die eingangs verwendete Formel $C = \dfrac{\varepsilon \cdot A}{d}$ gilt nur für den idealen Plattenkondensator, also für zwei planparallele, gegenüberliegende und gleich große Flächen, deren Abmessungen viel größer als der gegenseitige Abstand sind. Die Feldlinien zwischen den Flächen verlaufen parallel, wobei kein Streufeld vorhanden ist.

Für die meisten Sensorköpfe ist diese Bedingung nicht erfüllt, da dort z. B. eine Düse die eine und das Werkstück die andere Kondensatorfläche bilden. Die zuletzt erwähnte Formel gilt daher nur näherungsweise. Deswegen ist die Ausgangsspannung $U_{MESS}$ (t) der Meßschaltung an der Klemme 6 nicht so linear zum Abstand d, wie nach der Gleichung (3) zu erwarten ist.

Diese Nichtlinearität kann durch das Phaseneinstellglied 5 behoben werden. Durch Einstellung der Phasenverschiebung zwischen der Spannung $U_T(t)$ und der Meßspannung $U_{MESS}(t)$ kann eine zusätzliche Verzerrung der Kennlinie erhalten werden, um der Nichtlinearität entgegenzuwirken. Versuche haben gezeigt, daß man auf diesem Wege zu guten Linearisierungsergebnissen kommt, ohne die Stabilität der Regelschaltung zu gefährden.

Dazu wird nach Wahl eines bestimmten Sensorkopfs die Kennlinie zwischen der Meßspannung $U_{MESS}(t)$ und dem Abstand d aufgenommen, wobei dieser Vorgang unter Verstellung der Phasenverschiebung zwischen der Speisespannung $U_T(t)$ und der Meßspannung $U_{MESS}(t)$ so lange wiederholt wird, bis die genannte Kennlinie linear ist. Sie wird dann gespeichert und zur Abstandsregelung mit Hilfe des Sensorsystems verwendet. Die Linearität kann z. B. von einem Benutzer beurteilt oder durch eine Bewertungsschaltung elektronisch bewertet werden.

Das Phaseneinstellglied 5 kann beispielsweise ein Allpaß-Filter sein, das allgemein bekannt ist. Allpaß-Filter erster und zweiter Ordnung sind beispielsweise in U. Tietze, Ch. Schenk, Halbleiter-Schaltungstechnik, Springer-Verlag (1985), 7. Aufl., Seiten 431 bis 433 beschrieben.

Das Phaseneinstellglied 5 kann auch als Tiefpaßfilter, Hochpaßfilter oder Bandpaßfilter ausgebildet sein, so daß zusätzlich Signalstörungen herausgefiltert werden können.

Selbstverständlich ist es auch möglich, auf diese Weise und bei Verwendung induktiver oder resistiver Sensoren eine Linearität zwischen der Wechsel-Meßgröße und einer entsprechenden geometrischen Größe herzustellen.

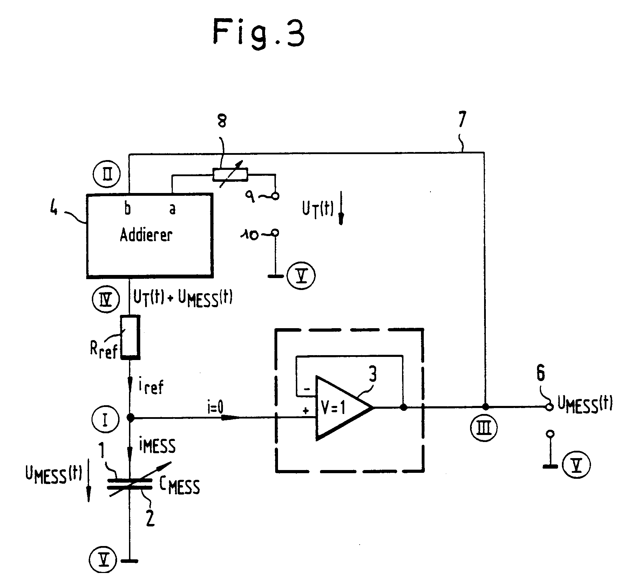

Die Fig. 3 zeigt ein zweites Ausführungsbeispiel einer erfindungsgemäßen Meßschaltung. Diese Meßschaltung unterscheidet sich von der in Fig. 2 gezeigten Meßschaltung dadurch, daß das Phaseneinstellglied im Rückkopplungszweig zwischen dem Ausgang des Impedanzwandlers 3 und dem Eingang b des Addierers 4 fortgelassen ist. Statt dessen ist der Ausgang des Impedenzwandlers 3 direkt über die Leitung 7 mit dem Eingang b des Addierers 4 verbunden. Die Wechsel-Speisespannung $U_T(t)$ liegt zwischen Klemmen 9 und 10, wobei letztere geerdet ist. Dagegen ist die Klemme 9 über ein Potentiometer 8 mit dem Eingang a des Addierers 4 verbunden. Ansonsten entspricht der Aufbau des zweiten Ausführungsbeispiels gemäß Fig. 3 dem des ersten Ausführungsbeispiels gemäß Fig. 2.

Mit Hilfe des Potentiometers 8 läßt sich die Amplitude der am Eingang a des Addierers 4 anliegenden Wechsel-Speisespannung $U_T(t)$ einstellen, so daß auf diese Weise die Kennlinie zwischen Wechsel-Meßspannung und geometrischer Größe für einen mit der Meßeinrichtung verbundenen Sensorkopf an eine vorgegebene Kennlinie angepaßt werden kann.

Das Potentiometer 8 gemäß Fig. 3 kann auch beim ersten Ausführungsbeispiel gemäß Fig. 2 mit dem Eingang a des Addierers 4 verbunden sein, so daß sich dann zusätzlich zu der Phasenverschiebung zwischen Wechsel-Speisespannung und Wechsel-Meßspannung auch die Amplitude der Wechsel-Speisespannung einstellen läßt.

Das Potentiometer 8 kann auch ein elektronisch einstellbarer Widerstand sein, der durch eine elektronische Schaltung eingestellt werden kann, die die Kennlinie zwischen Wechsel-Meßspannung und geometrischer Größe für einen neuen Sensorkopf mit der gespeicherten Kennlinie des alten Sensorkopfs vergleicht und in Abhängigkeit des Vergleichsergebnisses den Wert des Widerstands 8 so verändert, daß beide Kennlinien wenigstens annähernd übereinstimmen. Eine manuelle Einstellung des Widerstands 8 kann somit entfallen.

## Patentansprüche

1. Betriebseinstellverfahren für eine Meßeinrichtung, die zur Messung einer geometrischen Größe (d) unter Verwendung eines Sensors (1) dient, dem ein Wechsel-Meßstrom ($i_{MESS}(t)$) mit konstanter Amplitude von einer geregelten, phasenabhängigen Stromquelle (4, $R_{ref}$) zugeführt wird, wobei in einer zur Stromquelle gehörenden Überlagerungsstufe (4), der ein Referenzglied ($R_{ref}$) zur Erzeugung des Wechsel-Meßstroms ($i_{MESS}(t)$) nachgeschaltet ist, eine Wechsel-Speisespannung ($U_T(t)$) und eine vom Sensor (1) über einen Rückkopplungszweig der Stromquelle abgenommene Wechsel-Meßspannung ($U_{MESS}(t)$) zu einer am Referenzglied ($R_{ref}$) anliegenden Gesamtspannung überlagert werden, **dadurch gekennzeichnet,** daß zur Anpassung einer die Beziehung zwischen der Wechsel-Meßspannung ($U_{MESS}(t)$) und der geometrischen Größe (d) darstellenden Kennlinie an einen vorgegebenen Kennlinienverlauf wenigstens eine der der Überlagerungsstufe (4) zugeführten Wechselspannungen verändert wird.

2. Betriebseinstellverfahren nach Anspruch 1, **dadurch gekennzeichnet,** daß die Amplitude der Wechsel-Speisespannung ($U_T(t)$) verändert wird.

3. Betriebseinstellverfahren nach Anspruch 2, **dadurch gekennzeichnet,** daß die Amplitude der Wechsel-Speisespannung ($U_T(t)$) bei einem ersten Einstellvorgang so eingestellt wird, daß bei einer Einstellung der geometrischen Größe (d) auf den Wert Null die Wechsel-Meßspannung ($U_{MESS}(t)$) ebenfalls den Wert Null aufweist, und bei einem zweiten Einstellvorgang so verändert wird, daß dann, wenn die geometrische Größe (d) auf einen vorbestimmten Wert größer als Null eingestellt ist, die Wechsel-Meßspannung ($U_{MESS}(t)$) ebenfalls einen vorbestimmten Einstellwert größer als Null einnimmt.

4. Betriebseinstellverfahren nach Anspruch 1, **dadurch gekennzeichnet,** daß zwischen der Wechsel-Speisespannung ($U_T(t)$) und der Wechsel-Meßspannung ($U_{MESS}(t)$) eine Phasenverschiebung eingestellt und danach eine Kennlinie zwischen der Wechsel-Meßspannung ($U_{MESS}(t)$) und der geometrischen Größe (d) aufgenommen werden, und daß diese Vorgänge so lange unter Änderung der Phasenverschiebung wiederholt werden, bis die aufgenommene Kennlinie linear ist.

5. Betriebseinstellverfahren nach Anspruch 4, **dadurch gekennzeichnet,** daß zur Einstellung der Phasenverschiebung die Phase der Wechsel-Meßspannung ($U_{MESS}(t)$) verschoben wird.

6. Betriebseinstellverfahren nach einem der Ansprüche 1 bis 5, **dadurch gekennzeichnet,** daß die Wechsel-Meßspannung ($U_{MESS}(t)$) auf kapazitivem, induktivem oder resistivem Wege erzeugt wird.

7. Einrichtung zur Messung einer geometrischen Größe (d) unter Verwendung eines Sensors (1), mit einer phasenabhängigen Stromquelle (4, $R_{ref}$) zur Zuführung eines Wechsel-Meßstroms ($i_{MESS}(t)$) mit konstanter Amplitude zum Sensor (1), die eine Überlagerungsstufe (4) mit nachgeschaltetem Referenzglied ($R_{ref}$) zur Erzeugung des Wechsel-Meßstroms ($i_{MESS}(t)$) aufweist, welche zur Überlagerung einer Wechsel-Speisespannung ($U_T(t)$) mit einer vom Sensor (1) über einen Rückkopplungszweig der Stromquelle abgenommenen Wechsel-Meßspannung ($U_{MESS}(t)$) zu einer am Referenzglied ($R_{ref}$) anliegenden Gesamtspannung dient, **dadurch gekennzeichnet,** daß eine Einstelleinrichtung (8) zur Einstellung der Amplitude der an die Überlagerungsstufe (4) angelegten Wechsel-Speisespannung ($U_T(t)$) vorhanden und/oder ein Phaseneinstellglied (5) zur Einstellung einer Phasenverschiebung zwischen der Wechsel-Speisespannung ($U_T(t)$) und der Wechsel-Meßspannung ($U_{MESS}(t)$) im Rückkopplungszweig der phasenabhängigen Stromquelle angeordnet sind.

8. Einrichtung nach Anspruch 7, **dadurch gekennzeichnet,** daß das Phaseneinstellglied (5) zwischen einem im Rückkopplungszweig vorhandenen Impedanzwandler (3) und der Überlagerungsstufe (4) zur Überlagerung von Wechsel-Speisespannung ($U_T(t)$) und Wechsel-Meßspannung ($U_{MESS}(t)$) liegt.

9. Einrichtung nach Anspruch 7 oder 8, **dadurch gekennzeichnet,** daß der Sensor (1) ein kapazitiver, induktiver oder resistiver Sensor ist.

10. Einrichtung nach Anspruch 9, **dadurch gekennzeichnet,** daß zur Bildung eines kapazitiven Sensors ein als Kondensatorelektrode wirkender Sensorkopf (1) relativ zu einem Werkstück (2) verschiebbar ist.

11. Einrichtung nach einem der Ansprüche 7 bis 10, **dadurch gekennzeichnet,** daß das Referenzglied der phasenabhängigen Stromquelle ein ohmscher Widerstand ($R_{ref}$) ist.

12. Einrichtung nach Anspruch 10 und 11, **dadurch gekennzeichnet,** daß der Widerstandswert des Referenzwiderstands ($R_{ref}$) wenigstens annähernd so groß ist wie der zwischen Sensorkopf (1) und Werkstück (2) gebildete kapazitive Blindwiderstand ($X_C$).

13. Einrichtung nach einem der Ansprüche 8 bis 12, **dadurch gekennzeichnet,** daß eine parasitäre Eingangskapazität des Impedanzwandlers (3) wesentlich kleiner ist als eine zwischen Sensorkopf (1) und Werkstück (2) vorhandene Meßkapazität ($C_{MESS}$).

14. Einrichtung nach einem der Ansprüche 7 bis 13, **dadurch gekennzeichnet,** daß das Phaseneinstellglied (5) ein Allpaß-Filter ist.

15. Einrichtung nach einem der Ansprüche 7 bis 13, **dadurch gekennzeichnet,** daß das Phaseneinstellglied (5) ein Tiefpaßfilter, Hochpaßfilter oder Bandpaßfilter ist.

16. Einrichtung nach Anspruch 7, **dadurch gekennzeichnet,** daß die Einstelleinrichtung ein Potentiometer (8) oder ein elektronisch einstellbarer Widerstand ist.

## Claims

1. An operational setting method for a measuring device which serves to measure a geometrical variable (d) with the use of a sensor (1) which is fed an alternating measuring current ($i_{MEAS}(t)$) of constant amplitude by a regulated, phase-dependent current source (4, $R_{ref}$), an alternating supply voltage ($U_T(t)$) and an alternating measuring voltage ($U_{MEAS}(t)$) tapped by the sensor (1) via a feedback path of the current source being superimposed in a superimposition stage (4), which belongs to the current source and downstream of which a reference element ($R_{ref}$) for generating the alternating measuring current ($i_{MEAS}(t)$) is connected, to form a total voltage present at the reference element ($R_{ref}$), wherein in order to match a characteristic representing the relationship between the alternating measuring voltage ($U_{MEAS}(t)$) and the geometrical variable (d) to a prescribed characteristic curve at least one of the alternating voltages fed to the superimposition stage (4) is varied.

2. The operational setting method as claimed in claim 1, wherein the amplitude of the alternating supply voltage ($U_T(t)$) is varied.

3. The operational setting method as claimed in claim 2, wherein the amplitude of the alternating supply voltage ($U_T(t)$) is set in a first setting operation in such a way that when the geometrical variable (d) is set to the value zero, the alternating measuring voltage $U_{MEAS}(t)$) likewise has the value zero, and is varied in a second setting operation in such a way that when the geometrical variable (d) is set to a predetermined value greater than zero, the alternating measuring voltage ($U_{MEAS}(t)$) likewise assumes a predetermined setting value greater than zero.

4. The operational setting method as claimed in claim 1, wherein a phase shift is set between the alternating supply voltage ($U_T(t)$) and the alternating measuring voltage ($U_{MEAS}(t)$), and thereafter a characteristic is plotted between the alternating measuring voltage ($U_{MEAS}(t)$) and the geometrical variable (d), and these operations are repeated with a variation of the phase shift until the plotted characteristic is linear.

5. The operational setting method as claimed in claim 4, wherein in order to set the phase shift the phase of the alternating measuring voltage ($U_{MEAS}(t)$) is shifted.

6. The operational setting method as claimed in one of claims 1 to 5, wherein the alternating measuring voltage ($U_{MEAS}(t)$) is generated in a capacitive, inductive or resistive fashion.

7. A device for measuring a geometrical variable (d) with the use of a sensor (1), having a phase-dependent current source (4, $R_{ref}$) for feeding an alternating measuring current ($i_{MEAS}(t)$) of constant amplitude to the sensor (1), which current source has a superimposition stage (4) with a downstream reference element ($R_{ref}$) for generating the alternating measuring current ($i_{MEAS}(t)$), which superimposition stage serves to superimpose an alternating supply voltage ($U_T(t)$) together with an alternating measuring voltage $U_{MEAS}(t)$) tapped by the sensor (1) via a feedback path of the current source to form a total voltage present at the reference element ($R_{ref}$), wherein a setting device (8) is present for setting the amplitude of the alternating supply voltage ($U_T(t)$) applied to the superimposition stage (4), and/or a phase-setting element (5) for setting a phase shift between the alternating supply voltage ($U_T(t)$) and the alternating measuring voltage ($U_{MEAS}(t)$) is arranged in the feedback path of the phase-dependent current source.

8. The device as claimed in claim 7, wherein the phase-setting element (5) is located between an impedance converter (3), present in the feedback path, and the superimposition stage (4) for superimposing the alternating supply voltage ($U_T(t)$) and alternating measuring voltage ($U_{MEAS}(t)$).

9. The device as claimed in claim 7 or 8, wherein the sensor (1) is a capacitive, inductive or resistive sensor.

10. The device as claimed in claim 9, wherein in order to form a capacitive sensor a sensor head (1) acting as a capacitor electrode can be displaced relative to a workpiece (2).

11. The device as claimed in one of claims 7 to 10, wherein the reference element of the phase-dependent current source is an ohmic resistor ($R_{ref}$).

12. The device as claimed in claims 10 and 11, wherein the resistance value of the reference resistor ($R_{ref}$) is at least approximately as large as the capacitive reactance ($X_c$) formed between the sensor head (1) and workpiece (2).

13. The device as claimed in one of claims 8 to 12, wherein a parasitic input capacitance of the impedance converter (3) is substantially smaller than a measuring capacitor ($C_{MEAS}$) present between the sensor head (1) and workpiece (2).

14. The device as claimed in one of claims 7 to 13, wherein the phase-setting element (5) is an allpass filter.

15. The device as claimed in one of claims 7 to 13, wherein the phase-setting element (5) is a low-pass filter, high-pass filter or bandpass filter.

16. The device as claimed in claim 7, wherein the setting device is a potentiometer (8) or an electronically settable resistor.

EP 0 464 391 B1

**Revendications**

1. Procédé de réglage du fonctionnement d'un appareil de mesure, qui sert à mesurer une grandeur géométrique (d) en utilisant un capteur (1) auquel un courant de mesure alternatif ($i_{MESS}(t)$) d'amplitude constante est apporté par une source de courant régulée (4, $R_{ref}$) sensible à la phase, procédé selon lequel, dans un étage de superposition (4) qui fait partie de la source de courant et à la suite duquel est relié un organe de référence ($R_{ref}$) pour produire le courant de mesure alternatif ($i_{MESS}(t)$), une tension d'alimentation alternative ($U_T(t)$) et une tension de mesure alternative ($U_{MESS}(t)$), prélevée du capteur (1) par l'intermédiaire d'une branche de rétroaction de la source de courant, étant superposées pour obtenir une tension globale appliquée à l'organe de référence ($R_{ref}$), **caractérisé** en ce qu'afin d'adapter à une allure de courbe caractéristique prédéterminée une courbe caractéristique représentant la relation entre la tension alternative de mesure ($U_{MESS}(t)$) et la grandeur géométrique (d), on modifie au moins une des tensions alternatives apportées à l'étage de superposition (4).

2. Procédé de réglage de fonctionnement selon la revendication 1, **caractérisé** en ce qu'on modifie l'amplitude de la tension d'alimentation alternative ($U_T(t)$).

3. Procédé de réglage de fonctionnement selon la revendication 2, **caractérisé** en ce que l'amplitude de la tension d'alimentation alternative ($U_T(t)$) est, au cours d'une première opération de réglage, réglée de façon que la tension de mesure alternative ($U_{MESS}(t)$) présente elle aussi la valeur zéro lors d'un réglage de la grandeur géométrique (d) à la valeur zéro, puis est, au cours d'une seconde opération de réglage, modifiée de façon que, lorsque la grandeur géométrique (d) est réglée à une valeur prédéterminée supérieure à zéro, la tension de mesure alternative ($U_{MESS}(t)$) prenne elle aussi une valeur de réglage prédéterminée supérieure à zéro.

4. Procédé de réglage de fonctionnement selon la revendication 1, **caractérisé** en ce qu'on règle un déphasage entre la tension d'alimentation alternative ($U_T(t)$) et la tension de mesure alternative ($U_{MESS}(t)$), puis on enregistre une courbe caractéristique entre la tension de mesure alternative ($U_{MESS}(t)$) et la grandeur géométrique (d), et en ce qu'on répète ces opérations, en modifiant le déphasage, jusqu'à ce que la courbe caractéristique enregistrée soit linéaire.

5. Procédé de réglage de fonctionnement selon la revendication 4, **caractérisé** en ce que, pour régler le déphasage, on décale la phase de la tension de mesure alternative ($U_{MESS}(t)$).

6. Procédé de réglage de fonctionnement selon l'une quelconque des revendications 1 à 5, **caractérisé** en ce que la tension de mesure alternative ($U_{MESS}(t)$) est produite par voie capacitive, inductive ou résistive.

7. Appareil pour mesurer une grandeur géométrique (d) en utilisant un capteur (1), avec une source de courant sensible à la phase (4, $R_{ref}$), qui est destinée à apporter un courant de mesure alternatif ($i_{MESS}(t)$) d'amplitude constante au capteur (1) et qui présente un étage de superposition (4) à la suite duquel est relié un organe de référence ($R_{ref}$) pour produire le courant de mesure alternatif ($i_{MESS}(t)$), étage qui sert à superposer une tension d'alimentation alternative ($U_T(t)$) à une tension de mesure alternative ($U_{MESS}(t)$), prélevée du capteur (1) par l'intermédiaire d'une branche de rétroaction de la source de courant, pour obtenir une tension globale appliquée à l'organe de référence ($R_{ref}$), **caractérisé** en ce qu'il est prévu un dispositif de réglage (8) pour régler l'amplitude de la tension d'alimentation alternative ($U_T(t)$) appliquée à l'étage de superposition (4), et/ou un organe de réglage de phase (5) pour régler un déphasage entre la tension d'alimentation alternative ($U_T(t)$) et la tension de mesure alternative ($U_{MESS}(t)$), dans la branche de rétroaction de la source de courant sensible à la phase.

8. Appareil selon la revendication 7, **caractérisé** en ce que l'organe de réglage de phase (5) se trouve entre un transformateur d'adaptation d'impédance (3), présent dans la branche de rétroaction, et l'étage de superposition (4) pour superposer la tension d'alimentation alternative ($U_T(t)$) et la tension de mesure alternative ($U_{MESS}(t)$)

9. Appareil selon la revendication 7 ou 8, **caractérisé** en ce que le capteur (1) est un capteur capacitif, inductif ou résistif.

10. Appareil selon la revendication 9, **caractérisé** en ce qu'afin de former un capteur capacitif, une tête de capteur (1) jouant le rôle d'électrode de condensateur peut être déplacée par rapport à une pièce (2).

9

11. Appareil selon l'une quelconque des revendications 7 à 10, **caractérisé** en ce que l'organe de référence de la source de courant sensible à la phase est une résistance ohmique ($R_{ref}$).

12. Appareil selon la revendication 10 ou 11, **caractérisé** en ce que la valeur de résistance de la résistance de référence ($R_{ref}$) est au moins approximativement égale à la réactance capacitive ($X_C$) formée entre la tête de capteur (1) et la pièce (2).

13. Appareil selon l'une quelconque des revendications 8 à 12, **caractérisé** en ce qu'une capacitance d'entrée parasitaire du transformateur d'adaptation d'impédance (3) est nettement inférieure à une capacitance de mesure ($C_{MESS}$) présente entre la tête de capteur (1) et la pièce (2).

14. Appareil selon l'une quelconque des revendications 7 à 13, **caractérisé** en ce que l'organe de réglage de phase (5) est un filtre passe-tout.

15. Appareil selon l'une quelconque des revendications 7 à 13, **caractérisé** en ce que l'organe de réglage de phase (5) est un filtre passe-bas, un filtre passe-haut ou un filtre passe-bande.

16. Appareil selon la revendication 7, **caractérisé** en ce que le dispositif de réglage est un potentiomètre (8) ou une résistance à réglage électronique.

# Fig.1

# Fig.2

# Fig.3